# EUROPEAN PATENT SPECIFICATION

(11) **EP 3 273 689 B1**
(45) Date of publication and mention of the grant of the patent: **12.06.2019**
(21) Application number: 16305936.3
(22) Date of filing: 21.07.2016
(51) Int. Cl.: H04N 17/06

(54) **METHOD OF TESTING THE OPERATION OF A VIDEO PLAYER EMBEDDED IN AN ELECTRONIC DISPLAY DEVICE**
VERFAHREN ZUM PRÜFEN DER FUNKTION EINES VIDEOPLAYERS, DER IN EINER ELEKTRONISCHEN ANZEIGEVORRICHTUNG EINGEBETTET IST
PROCÉDÉ PERMETTANT DE TESTER LE FONCTIONNEMENT D'UN LECTEUR VIDÉO INTÉGRÉ DANS UN DISPOSITIF D'AFFICHAGE ÉLECTRONIQUE

(43) Date of publication of application: 24.01.2018
(73) Proprietor: Eurofins Scientific (Ireland) Limited, Co Waterford (IE)
(72) Inventor: Tallis, Dan, Bristol BS3 2 AN (GB); Campbell, Bob, Whitehall BS5 7AY (GB)
(74) Representative: Hervouet-Malbec, Sylvie

(56) References cited:
- JP-A- 2000 244 947
- JP-A- 2008 206 042
- US-A1- 2008 256 394

## Description

The present disclosure relates generally to video players, and more particularly to a method of testing the operation of a video player embedded in an electronic display device.

Tests are generally performed on a video player embedded in an electronic device in order to determine if the video player is playing video correctly, including responding correctly to commands for "trick modes" such as pause , fast-forward, seek back or seek forward.

Such tests are quite simple to perform when video players are embedded in devices which deliver the video to an independent display, since it is then possible to capture, from the display output, a precise and exactly rendered version of the video being played, and straightforwardly compare it with the original source.

By contrast, for devices with integrated display, such as TVs, mobile phones or tablets, the capture of the video as rendered by the display must be made by an external device, such as a video camera, in order to accurately and faithfully record the displayed image without interfering with the device playout itself. This external capture device is however sensitive to factors beyond the system under test. The testing of players on those devices involves extensive calibration of the capture device and various means to exclude external factors, and is often a manual approach meaning it is very subjective and hard to repeatedly test a large range of devices, and to test automatically usually involves very expensive equipment and a specialist test set up, minimizing errors introduced in the capture process.

Document US 8, 086, 902 discloses a method of testing the operation of a media player, such as a video player, according to which visually encoded metrics are embedded in a media file that is to serve as a test file. These metrics can be detected and decoded when the test file is rendered by the media player. A testing program automatically executes various playback commands to simulate the way a user would operate the media player when viewing a media file. The testing program captures the media player's display buffer after the execution of each command. The display buffer includes the frame or frames that are played by the media player as a result of the commands. The metric or metrics embedded in the captured frames are detected and decoded and compared to a database that includes the metric or metrics that would be expected if the media player is correctly playing the test file. More precisely, Document US 8, 086, 902 discloses a method of testing the operation of a video player embedded in an electronic display device, comprising the steps of:
- loading a test file into the video player, the test file including a sequence of video frames that each have at least one visual metric reflecting a known characteristic of the video frame;
- instructing the video player to render at least a portion of the test file in a prescribed manner;
- capturing the rendered portion of the test file;
- detecting and decoding the at least one visual metric associated with at least one of the video frames located in the captured portion of the test file;
- comparing the decoded visual metric to a first metric that is expected when the test file is rendered in the prescribed manner; and
- reporting that the decoded visual metric successfully or unsuccessfully matched the expected metric.

The above-mentioned method is however not suitable for the present situation. Indeed, US 8, 086, 902 basically discloses the use of a visual identifier which overlays the content of a video in each frame. Accurate comparison can be made only if the rendered test video is captured directly from an output of the player, or, as disclosed, from the display buffer of the player.

In addition, US 8, 086, 902 discloses the real comparison of the expected metric with the captured metric.

Moreover, the real comparison of the expected metric with the captured metric is performed on a frame basis and a failure is reported in case there is no match between the metrics. This solution does not enable to make a robust assessment of rendering problems which would be linked to playback speed or frame jitter for instance, or missing frames due to playback errors rather than errors in the capture process. It does not disclose a means of eliminating common errors in the decoding of metrics captured in the presence of interference from the environment, including but not limited to poor lighting, reflections, imprecise camera alignment, and overlays from the player itself superimposed on the source video.

There is thus a need to find a suitable testing method for checking the correct behaviour of a video player from a capture of a testing video being played by an external video recorder.

Document JP2008206042 teaches a method for quantitatively evaluating the subjective quality of video images by statistically evaluating the smoothness of a test video sequence based on the ratio of consecutive identical frames. A QR code is used for identifying uniquely a video frame number within test video sequence. Test videos images are played on a display and captured by a video image photographic unit which photographs display to produce DV video data. Frame identification codes are then extracted from the DV video data and are used by an evaluation unit which statistically evaluates the frame rate.

In order to address the shortcomings of the present state of the art, the present invention provides a method according to claim 1.

According to some possible embodiments:
- said barcode is a two-dimensional Quick Response Code;
- said barcode preferably contains source identification information to distinguish between multiple source sequences combined within the system under test;
- said plurality of video frames have preferably no visual content other than said at least one visual metric;
- the video frame may include at least two specific easily identifiable features for calculation of a reference position of a metric with reference to a physical display of said electronic display device, and/or for determination of correct alignment, and/or aspect ratio of the rendered video with respect to the physical display;
- when the barcode comprises a rectangular or square pattern, said at least two specific easily identifiable features may be areas located on edges of said pattern;
- alternatively or in combination, the captured frame may include at least two specific identifiable features that are fixed to the device but are not part of the test video sequences for calculation of a reference position and/or for determination of correct alignment of the player relative to the camera, and/or identifying the extent of the rendering frame within the captured frame;
- the checking step may comprise making assertions about the player behaviour properties of a captured frame sequence or sub-sequence combined with properties of the player control sequence or sub sequence to determine player correctness. This may help for instance to determine if the player under test has played for the correct length of time;
- making assertions incorporates for instance a priori knowledge encoded in a rules engine of properties of one or more players, content and source such that further determination of player correctness can be made automatically from the captured frame sequence and/or control sequence. This may help to determine e.g. a failure to clear a buffer before resuming playback;

The step of making assertions may be crafted in line with player control in a rules engine such that test scripts are processed in linear time even though the analysis of the captured data and resolution of assertions is conducted at a different time;
- the checking step preferably comprise creating a human readable presentation of the results from the preceding assertion analysis, said presentation including a visual graph representing on one axis player control time and on another captured video time;
- test events may be overlaid on said visual graph.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

Some embodiments of apparatus and/or methods in accordance with embodiments of the present invention are now described, by way of example only, and with reference to the accompanying drawings, in which:
Figure 1 shows an exemplary video frame used in a test video sequence according to one embodiment of the invention;
Figure 2 illustrates an example of two successive frames in a test video sequence according to the invention;
Figure 3 gives a flow diagram illustrating a method according to an embodiment of the present invention;
Figure 4 shows an example of result log which can be obtained with the test method according to the invention;
Figures 5 and 6 illustrate an example of generation of a test video sequence in the realm of adaptive resolution video.

The method for testing the operation of a video player embedded in an electronic display device according to the invention is essentially based on making one or more test video sequences available to the video player, each test video sequence comprising video frames that each has at least one visual metric reflecting a known characteristic of the video frame wherein said at least one visual metric is a one or two-dimensional barcode, such as a Quick Response (QR) code, identifying uniquely a set of characteristics of the video frame, such as but not limited to frame number, source frame rate, source resolution, source origin, within the sequence.

A two-dimensional matrix barcode, also known as Data Matrix code, consists of black and white "cells" or modules arranged in either a square or rectangular pattern. The information to be encoded can be text or numeric data. Usual data size is from a few bytes up to 1556 bytes. The length of the encoded data depends on the number of cells in the matrix. Data Matrix codes are generally used in applications such as product tracking, item identification, document management, and general marketing.

In the context of the invention, using such a two-dimensional matrix barcode guarantees that the encoded information, namely at least the frame number, can be robustly decoded from the capture, which may be, among other issues, shaky, suffer from variations in exposure over time, have unwanted noise due to reflections, not be squarely aligned with the device display. The capture can thus be made by any kind of external capturing device, for instance any video camera, because the codes will be in any case robustly decodable from the captured video even in the presence of factors such as analogue noise, judder, misalignment, variations in exposure over time, reflections. Other information about the video can be also encoded.

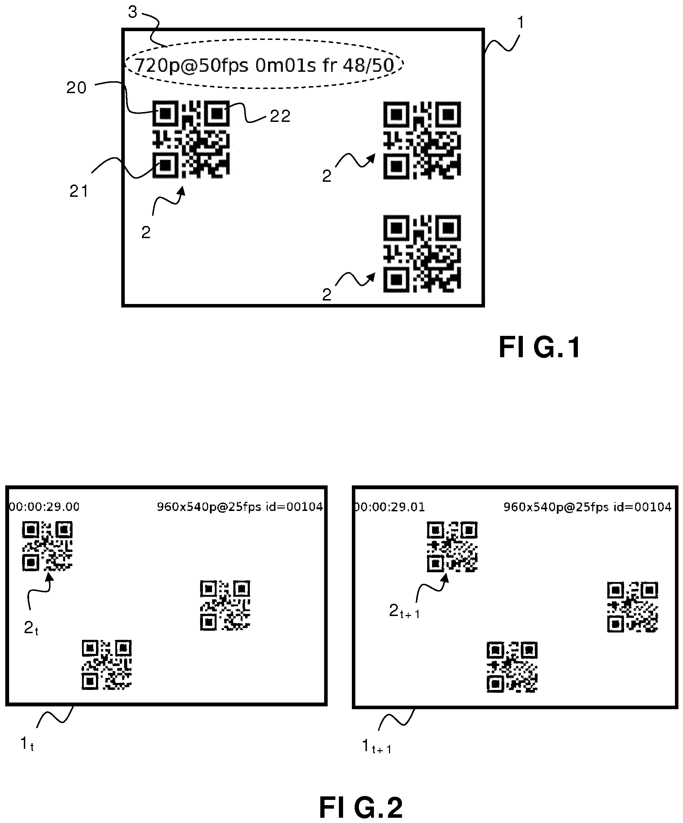

Figure 1 illustrates an exemplary video frame 1 belonging to a test video sequence according to one embodiment of the invention. Frame 1 comprises at least one two-dimensional matrix barcode 2. Frame 1 may also comprise at text field 3 which give, for example, simple human readable metrics such as times stamp indications for later analysis, but are not critical to the method disclosed.

Specific areas 20, 21, 22 on at least three edges of the pattern for barcode 2 are advantageously used to allow for a reference position to be calculated, and to also determine correct alignment, aspect ratio and other such characteristics of correct operation of the video player under test. In addition, such a code may also be presented in at least three reference positions outside the extent of the rendered frame, to provide additional robust detection of rendering issues such as offset from centre, bleed outside the available display and capture device alignment and rendering aspect ratio issues. These add robustness and testing advantages over and above what is achievable with metrics encoded in the source video alone and can only be captured via an independent capture device.

Alternatively, at least two specific easily identifiable features could be used within the video frame but independent from the visual metrics for calculation of a reference position of a metric with reference to a physical display of said electronic display device, and/or for determination of correct alignment, and/or aspect ratio of the rendered video with respect to the physical display.

Another way to calculate a reference position and/or to determine correct alignment of the player relative to the capture device, and/or identifying the extent of the rendering frame within the captured frame could be that the captured frame includes at least two specific identifiable features that are fixed to the device but are not part of the test video sequences.

Although a single one or two-dimensional matrix barcode 2 is necessary in principle, multiple copies of a matrix barcode 2 are preferably incorporated on each frame to further increase robustness. Frame 1 in figure 1 shows the use of three identical barcodes 2. This addresses in particular player issues such as acceptable (to the tester) but incomplete rendering of a full frame, environmental issues such as reflections on parts of the screen of the player under test, and/or natural variations in environment (e.g. changing ambient light) during the course of testing. In addition, many players display opaque or semi-transparent banners with information for the user at certain times on certain parts of the screen, which can obscure the visual metrics. For example many players display an information banner for the viewer with a textual description of the video displayed across the bottom of the screen. Different players display overlays in different locations (e.g. another may display information at the top of the screen). Having multiple copies of the two-dimensional matrix barcode 2 within a frame 1 allows the system to work despite those overlays, environmental factors and other issues that may occur during normal playback.

Figure 2 shows an example of two successive frames 1ₜ, 1ₜ₊₁ in a test video sequence. Each frame 1ₜ, 1ₜ₊₁ includes its associated visual metric (barcode 2ₜ for frame 1ₜ and barcode 2ₜ₊₁ for frame 1ₜ₊₁), preferably in duplicated or triplicated form as illustrated for the reasons given above. It can be seen on figure 2 that the visual metric changes every frame since it encodes information, at least the frame number, which changes every frame.

In addition, according to a possible embodiment and as shown by comparing both frames 1ₜ, 1ₜ₊₁ in figure 2, the location of the visual element within a frame is also changed each frame, cycling through a number of predefined non-overlapping locations in the frame, to avoid problems of exposure of multiple frames of source video in the captured video. Indeed, unless the capture frame rate and the playout frame rate are exactly synchronized, and the exposure parameters in the capturing device are set appropriately, it is likely that a captured frame will contain partially exposed images of more than one frame from the displayed video, overlaid on each other, and effectively corrupting the image and making it hard or impossible to extract the encoded frame number information reliably. Moving the location of the barcode by cycling through a number of non-overlapping position guarantees that a barcode, and thus the associated frame information, including the frame number, can be decoded for each captured frame.

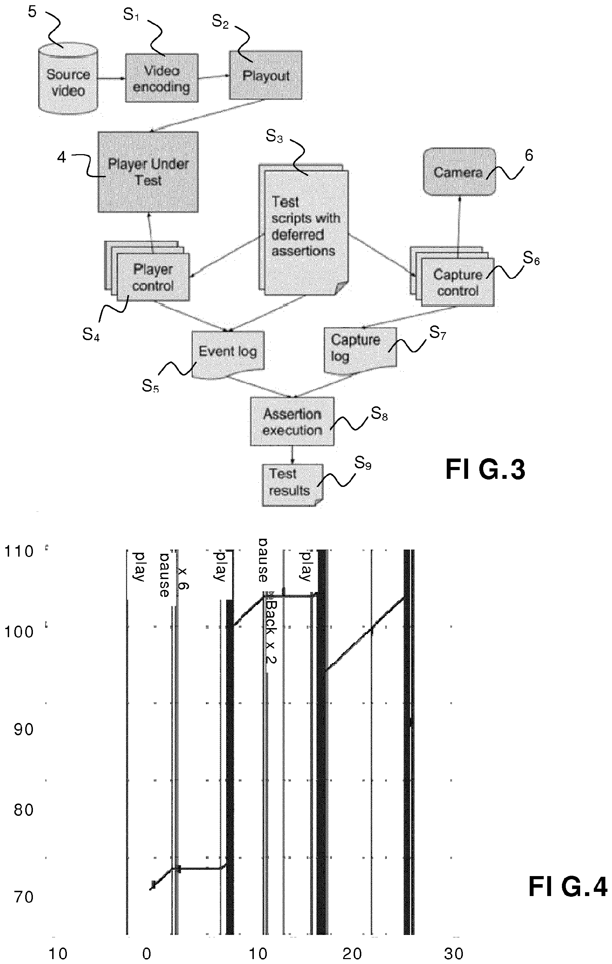

Figure 3 gives a flow diagram illustrating a method according to an embodiment of the present invention for testing the behaviour of a video player 4 embedded in an electronic display device.

The method begins with making one or more test video sequences available to the video player 4, each test video sequence comprising video frames that each has at least one two-dimensional matrix barcode identifying uniquely a video frame number within the test video sequence, as explained above. As should be apparent, this can be made available to the player in different ways. In the exemplary embodiment in figure 3, this first step comprises a sub-step S₁ for encoding a source video 5 delivered by a broadcast or non-broadcast playout system S₂.

In alternate embodiment, the test video sequence can be retrieved from the Internet Network to which the video player can be connected.

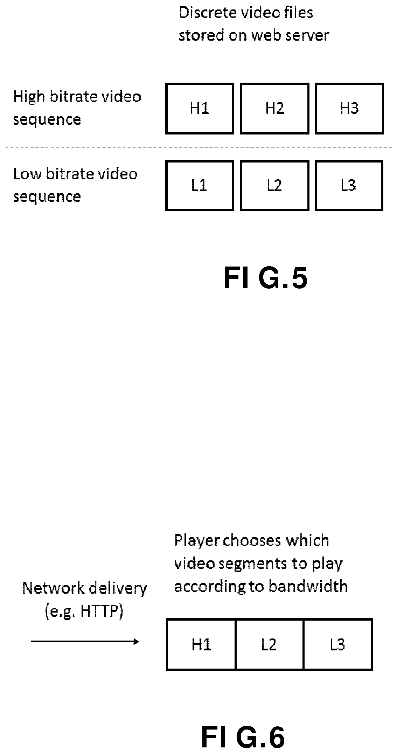

In another alternate embodiment, the video player 4 may itself build the test video sequence from test video objects (namely particular frames and/or particular two-dimensional matrix barcodes) the video player 4 can retrieve from a local database or from the Internet network, according to some rules encoded within the player as it will be explained e.g. in another embodiment in reference to figures 5 and 6.

Then, the video player 4 is instructed to render at least a portion the test video sequence in a prescribed manner. This can be performed by controlling the playout using some automated means such as test scripts as indicated by step S₃, and/or manual means, such as a remote control device associated with the electronic display device, as indicated by step S₄.

In step S₆, the rendered portion is captured using a normal video camera 6 pointed at the display of the device. Thanks to the use of two-dimension matrix barcodes, the capture can be made by any generic off the shelf video capture device (hand held mobile phone, fixed web cam) of reasonable quality but not requiring careful calibration, higher than normal resolution, darkroom conditions or even to be fixed in place to record the playout.

The visual metrics, if present, associated with the captured video frames can then be decoded and a video capture log can be generated, said video capture log comprising at least each frame number extracted from the available visual metrics, and/or gaps in the log corresponding to missing frames in the rendered video, and the time the corresponding captured frame was captured (step S₇).

Hence, by analysing the captured frame metadata at a given time, and/or comparison with at least a preceding frame, and/or the expected presence of some metadata, it is possible to make assertions about whether the video player is playing the video correctly.

In other words, checking if the video player 4 has correctly rendered the portion of said one or more test video sequences in said prescribed manner based on said decoded visual metric comprises evaluating the sequence of decoded visual metrics and determining correct rendering characteristics from a priori known features of such a sequence, including but not limited to comparing the timing and sequencing of displayed frame numbers extracted from the decoded visual metrics with an expected timing and sequencing of frame numbers.

The video capture log generated at step S₇ can be compared to an event log generated independently (step S₅) and corresponding to the manner according to which video player 4 has been instructed to render the video test sequence(s).

To this end, a specially crafted result log may be generated from the video capture log and the event log. An example of representation of such result log is shown in figure 4, where a video player under test has been instructed to sequentially play, pause, performing a 6x seek forward, play, pause, performing a 2x seek back and play. X and Y axes are each time axes, X indicates events and Y indicates video playback events. Some artefacts can be seen such as continuing to playout for a short period after a pause, and playing a small section of the wrong video (player emptying a buffer) following a 6x seek forward and after a 2x seek back.

A mechanism by which to interpret the log in such a way that test assertions can then be made in test scripts used to drive the overall process, and tests be determined to have passed or failed e.g.(steps S₈ and S₉).

As an example, a simple test script could be the following one:
- Test action: play video
- Test assertion: playback has started within 5ms
- Test result: pass/fail

For more complex test scripts, a library of functions is advantageously defined that takes the playout event and video capture as input and enable queries and assertions to be made, so that users can conveniently check that the player under test performed as expected.

Video analysis (steps S₈ and S₉) may be conducted off-line, thereby reducing the processing requirements of the overall system to relatively standard off the shelf PC hardware. Therefore the player control aspects of the test script run at a different time from the assertions (and potentially in a separate location, e.g. on a server, rather than next to the device under test). The system implementing the method may be designed however to implement "deferred assertions" that can be written in-line with the test script but get evaluated later. This has a couple of advantages:
- It is more natural to design the test with "in-line" assertions, even though their execution is deferred.
- It simplifies the assertion API design. For example, it naturally gives a meaning to "now" which would not be possible if the assertions were designed completely "off-line", and may avoid the need for functions to "search" for particular interesting events in the capture log.
- It makes it possible to run unaltered assertions/test scripts in real time with player control in an alternative version of the system that has the capability for real-time video analysis.

The specially crafted log is generated from the two independently created logs of event and video capture - and not necessarily using the same time sources. For some tests/assertions/use-cases it will be important to know the relationship between the two timelines, for example checking that the video started playing within a certain time of the play instruction being sent to the player.

A solution is to record a wall-clock time for the first frame of captured video, alongside the captured video. The video analysis tool can then translate the captured frame timestamps into wall-clock time. This requires the event log to use the same clock for its timestamps. This could be facilitated by combining the player control component and the video capture control component into a single component that can use a single time source.

The method of testing according to the invention allows the use of low cost commodity video capture devices and a range of test environments, because the method is robust to effects of low quality video capture (compared to solutions which don't use specially crafted video).

It also allows for simple tests to be created at low cost that can reproducibly evaluate players correctness and performance, and that are portable across a range of devices independent of their form factor (TV, set top box, tablet...) and interface. This creates significant savings when automating a range of test scenarios in practice, compared to more brittle or expensive automation, or manual only, solutions that exist at present.

With the method according to the invention, one can easily and robustly detect a large range of common video player/playout system problems, such as
- not playing the video,
- playing at wrong speed,
- missing frames,
- wrong position found, delay and jitter in trick modes (seek, fast forward, rewind etc.),
- various classes of human perceptible video quality impairments,
- incorrect handling of aspect ratio, alignment, video encoding, resolution changes between video segments within a stream (such as might occur when switching between a program and advertisement),
- adaptive streaming algorithms in the presence of network impairments not working correctly.

For instance, in the realm of adaptive video, a video player may have to choose between high and low resolution videos based on network conditions. Analysis of the effectiveness of the player algorithm used to adapt to such network behaviour can also be performed using the method of the invention by providing different visual metrics (namely different two-dimensional matrix barcodes) which can be used to distinguish between different variants of the content at the same timecode a means of varying network conditions automatically within a test script to simulate a change in the network conditions (available bandwidth).

Two test video sequences are shown in figure 5, one associated with the high bitrate and one associated with the low bitrate. These test video sequences can be stored either locally or on a web server. Each test video sequence is in fact split into a series of temporal portions or chunks (H1, H2, H3, or L1, L2, L3) which each corresponds to a particular frame of the sequence with its associated two-dimensional matrix barcode. More precisely, chunk H1 (H2, H3) corresponds to a frame of the test video sequence which is expected to be rendered by a video player connected to the Internet network in high resolution conditions, while chunk L1 (L2, L3 respectively) corresponds to the same frame of the test video sequence which is expected to be rendered by the video player connected to the Internet network in low resolution conditions.

According to the invention, a test script is created simulating the prevailing network conditions (available bandwidth). Based on these prevailing network conditions, the video player under test can download these chunks and choose which bitrate version of a chunk for a given time to request. Figure 6 shows an example of a test video sequence where the first frame of the sequence corresponds to chunk H1, while the two subsequent frames correspond to chucks L2 and L3.

## Claims

1. A method of testing the operation of an electronic device comprising a display and a video player (4), comprising the steps of:
making (S₁, S₂) one or more test video sequences available to the video player, each test video sequence comprising video frames (1, 1ₜ, 1ₜ₊₁) that each has at least one visual metric (2, 2ₜ, 2ₜ₊₁) reflecting a known characteristic of the video frame;
instructing (S₃, S₄) the video player (4) to render at least a portion of said one or more test video sequences in a prescribed manner on said display;
capturing (S₆) the rendered portion of said one or more test video sequences;
decoding (S₇) the at least one visual metric associated with at least one of the video frames located in the captured portion of said one or more test video sequences;
checking (S₅, S₇-S₉) if the video player (4) has correctly rendered the portion of said one or more test video sequences in said prescribed manner based on said decoded visual metric;
**characterized in that** the step (S₆) of capturing the rendered portion is performed through a video camera (6) pointed at the display of the electronic device, **in that** said at least one visual metric is a two-dimensional barcode (2, 2ₜ, 2ₜ₊₁) identifying uniquely a video frame number within the test video sequences, the location of said at least one visual metric (2, 2ₜ, 2ₜ₊₁) within a video frame (1, 1ₜ, 1ₜ₊₁) being moved each video frame, cycling through a number of non-overlapping locations in the video frame, and **in that** the checking step comprises generating (S₇) a video capture log comprising at least each frame number extracted from the visual metrics associated with the captured frames and a time at which the corresponding frame was captured and an event log corresponding to said prescribed manner according to which said video player has been instructed to render the at least a portion of said one or more test video sequences, and comparing the timing and sequencing of frame numbers extracted from the decoded visual metrics with an expected timing and sequencing of frame numbers by comparing said video capture log to said event log.

2. The method according to claim 1, **characterized in that** said barcode (2, 2ₜ, 2ₜ₊₁) is a two-dimensional Quick Response Code.

3. The method according to claim 1, characterized on that said barcode identifies uniquely a set of characteristics of the video frame, said set of characteristics comprising said frame number, a source origin, a source frame rate, and a source resolution.

4. The method according to any one of the preceding claims, **characterized in that** each of said plurality of video frames (1, 1ₜ, 1ₜ₊₁) comprises only said at least one visual metric (2, 2ₜ, 2ₜ₊₁).

5. The method according to any one of the preceding claims, **characterized in that** the video frame (1, 1ₜ, 1ₜ₊₁) includes at least two specific identifiable features (20, 21, 22) for calculation of a reference position of a metric with reference to said display, and/or for determination of correct alignment, and/or aspect ratio of the rendered video with respect to the display.

6. The method according to claim 5, **characterized in that** the barcode (2, 2ₜ, 2ₜ₊₁) comprises a rectangular pattern or a square pattern with four edges, and said at least two specific identifiable features (20, 21, 22) are areas located on two edges of said pattern.

7. The method according to any one of the preceding claims, **characterized in that** the captured frame (1, 1ₜ, 1ₜ₊₁) includes at least two specific identifiable features that are fixed to the display device but are not part of the test video sequences for determination of correct alignment of the player relative to the camera.

8. The method according to claim 1, **characterized in that** the checking step comprises generating a result log from the video capture log and the event log, and creating (S₉) a human readable presentation of the result log, said presentation including a visual graph representing on one axis player control time and on another captured video time.

9. The method according to claim 8, **characterized in that** test events are overlaid on said visual graph.

## Patentansprüche

1. Verfahren zum Testen des Betriebs einer elektronischen Vorrichtung, die eine Anzeige und ein Videogerät (4) aufweist, umfassend die folgenden Schritte:
Verfügbarmachen (S₁, S₂) einer oder mehrerer Testvideosequenzen für das Videogerät, wobei jede Testvideosequenz Videoframes (1, 1ₜ, 1ₜ₊₁) umfasst, die jeweils mindestens eine visuelle Metrik (2, 2ₜ, 2ₜ₊₁) aufweisen, die eine bekannte Charakteristik des Videoframes widerspiegelt;
Anweisen (S₃, S₄) des Videogeräts (4), wenigstens einen Teil der einen oder der mehreren Testvideosequenzen in einer vorgegebenen Weise auf der Anzeige wiederzugeben;
Erfassen (S₆) des wiedergegebenen Teils der einen oder der mehreren Testvideosequenzen;
Decodieren (S₇) der mindestens einen visuellen Metrik, die mit mindestens einem der Videoframes assoziiert ist, der sich im erfassten Teil der einen oder der mehreren Testvideosequenzen befindet;
Prüfen (S₅, S₇-S₉), ob das Videogerät (4) den Teil der einen oder der mehreren Testvideosequenzen in der vorgegebenen Weise korrekt wiedergibt, basierend auf der visuellen Metrik;
**dadurch gekennzeichnet, dass** der Schritt (S₆) des Erfassens des wiedergegebenen Teils durch eine Videokamera (6) ausgeführt wird, die auf die Anzeige der elektronischen Vorrichtung gerichtet ist, dadurch, dass die mindestens eine visuelle Metrik ein zweidimensionaler Strichcode (2, 2ₜ, 2ₜ₊₁) ist, der eine Videoframenummer innerhalb der Testvideosequenzen eindeutig identifiziert, wobei die Stelle der mindestens einen visuellen Metrik (2, 2ₜ, 2ₜ₊₁) innerhalb eines Videoframes (1, 1ₜ, 1ₜ₊₁) jeden Videoframe bewegt wird, wobei eine Anzahl von nichtüberlappenden Stellen im Videoframe durchlaufen wird, und dadurch, dass der Prüfschritt ein Erzeugen (S₇) eines Videoerfassungsprotokolls, das mindestens jede Framenummer, die aus den visuellen Metriken extrahiert wird, die mit den erfassten Frames assoziiert sind, und eine Zeit umfasst, zu welcher der entsprechende Rahmen erfasst wurde, und eines Ereignisprotokolls, das der vorgegebenen Weise entspricht, gemäß der das Videogerät zum Wiedergeben des mindestens einen Teils der einen oder der mehreren Testvideosequenzen angewiesen wurde, und Vergleichen des Timings und der Sequenzialisierung von Framenummern, die aus den decodierten visuellen Metriken extrahiert werden, mit einem erwarteten Timing und einer erwarteten Sequenzialisierung von Framenummern durch Vergleichen des Videoerfassungsprotokolls mit dem Ereignisprotokoll umfasst.

2. Verfahren nach Anspruch 1, **dadurch gekennzeichnet, dass** der Strichcode (2, 2t, 2t+1) ein zweidimensionaler Quick-Response-Code ist.

3. Verfahren nach Anspruch 1, **dadurch gekennzeichnet, dass** der Strichcode einen Satz von Charakteristiken des Videoframes eindeutig identifiziert, wobei der Satz von Charakteristiken die Framenummer, einen Ursprung der Quelle, eine Framerate der Quelle und eine Auflösung der Quelle umfasst.

4. Verfahren nach einem der vorhergehenden Ansprüche, **dadurch gekennzeichnet, dass** jeder der Mehrzahl von Videoframes (1, 1ₜ, 1ₜ₊₁) nur die mindestens eine visuelle Metrik (2, 2ₜ, 2ₜ₊₁) umfasst.

5. Verfahren nach einem der vorhergehenden Ansprüche, **dadurch gekennzeichnet, dass** der Videoframe (1, 1ₜ, 1ₜ₊₁ mindestens zwei spezifische identifizierbare Merkmale (20, 21, 22) zur Berechnung einer Bezugsposition einer Metrik in Bezug auf die Anzeige und/oder zur Bestimmung von korrekter Ausrichtung und/oder eines Aspektverhältnisses des wiedergegebenen Videos in Bezug auf die Anzeige umfasst.

6. Verfahren nach Anspruch 5, **dadurch gekennzeichnet, dass** der Strichcode (2, 2ₜ, 2ₜ₊₁) ein rechteckiges Muster oder ein quadratisches Muster mit vier Kanten umfasst, und die mindestens zwei spezifischen identifizierbaren Merkmale (20, 21, 22) Bereiche sind, die sich an zwei Kanten des Musters befinden.

7. Verfahren nach einem der vorhergehenden Ansprüche, **dadurch gekennzeichnet, dass** der erfasste Frame (1, 1ₜ, 1ₜ₊₁) mindestens zwei spezifische identifizierbare Merkmale umfasst, die an der Anzeigevorrichtung fixiert sind, aber nicht zu den Testvideosequenzen zur Bestimmung von korrekter Ausrichtung der Videogeräts in Bezug auf die Kamera gehören.

8. Verfahren nach Anspruch 1, **dadurch gekennzeichnet, dass** der Prüfschritt ein Erzeugen eines Ergebnisprotokolls aus dem Videoerfassungsprotokoll und dem Ereignisprotokoll und Erstellen (S₉) einer für den Menschen lesbaren Darstellung des Ergebnisprotokolls umfasst, wobei die Darstellung eine visuelle Grafik umfasst, die auf einer Achse die Kontrollzeit des Videogeräts und auf der anderen die Zeit des erfassten Videos darstellt.

9. Verfahren nach Anspruch 8, **dadurch gekennzeichnet, dass** Testereignisse auf der visuellen Grafik eingeblendet werden.

## Revendications

1. Procédé de test du fonctionnement d'un dispositif électronique comprenant un écran d'affichage et un lecteur vidéo (4), comprenant les étapes ci-dessous consistant à :
mettre (S₁, S₂) une ou plusieurs séquences vidéo de test à disposition du lecteur vidéo, chaque séquence vidéo de test comprenant des trames vidéo (1, 1ₜ, 1ₜ₊₁) qui présentent chacune au moins une métrique visuelle (2, 2ₜ, 2ₜ₊₁) reflétant une caractéristique connue de la trame vidéo ;
donner instruction (S₃, S₄) au lecteur vidéo (4) de rendre au moins une partie de ladite une ou desdites plusieurs séquences vidéo de test, d'une manière prescrite, sur ledit écran d'affichage ;
capturer (S₆) la partie rendue de ladite une ou desdites plusieurs séquences vidéo de test
décoder (S₇) ladite au moins une métrique visuelle associée à au moins l'une des trames vidéo situées dans la partie capturée de ladite une ou desdites plusieurs séquences vidéo de test
vérifier (S₅, S₇-S₉) si le lecteur vidéo (4) a correctement rendu la partie de ladite une ou desdites plusieurs séquences vidéo de test, de ladite manière prescrite, sur la base de ladite métrique visuelle décodée ;
**caractérisé en ce que** l'étape (S₆) de capture de la partie rendue est mise en oeuvre par l'intermédiaire d'une caméra vidéo (6) pointée vers l'écran d'affichage du dispositif électronique, **en ce que** ladite au moins une métrique visuelle est un code à barres bidimensionnel (2, 2ₜ, 2ₜ₊₁) identifiant de manière unique un numéro de trame vidéo dans les séquences vidéo de test, dans lequel l'emplacement de ladite au moins une métrique visuelle (2, 2ₜ, 2ₜ₊₁) au sein d'une trame vidéo (1, 1ₜ, 1ₜ₊₁) est déplacé à chaque trame vidéo, en effectuant une itération sur un nombre d'emplacements sans chevauchement dans la trame vidéo, et **en ce que** l'étape de vérification comprend l'étape consistant à générer (S₇) un journal de capture vidéo comprenant au moins chaque numéro de trame extrait des métriques visuelles associées aux trames capturées et une heure à laquelle la trame correspondante a été capturée, et un journal d'événements correspondant à ladite manière prescrite selon laquelle il a été donné instruction audit lecteur vidéo de rendre ladite au moins une partie de ladite une ou desdites plusieurs séquences vidéo de test, et à comparer une temporisation et un séquencement de numéros de trames extraits des métriques visuelles décodées à une temporisation et un séquencement attendus de numéros de trames, en comparant ledit journal de capture vidéo audit journal d'événements.

2. Procédé selon la revendication 1, **caractérisé en ce que** ledit code à barres (2, 2ₜ, 2ₜ₊₁) est un code à réponse rapide bidimensionnel.

3. Procédé selon la revendication 1, **caractérisé en ce que** ledit code à barres identifie de manière unique un ensemble de caractéristiques de la trame vidéo, ledit ensemble de caractéristiques comprenant ledit numéro de trame, une origine source, une fréquence de trames source et une résolution source.

4. Procédé selon l'une quelconque des revendications précédentes, **caractérisé en ce que** chaque trame de ladite pluralité de trames vidéo (1, 1ₜ, 1ₜ₊₁) comprend uniquement ladite au moins une métrique visuelle (2, 2ₜ, 2ₜ₊₁).

5. Procédé selon l'une quelconque des revendications précédentes, **caractérisé en ce que** la trame vidéo (1, 1ₜ, 1ₜ₊₁) inclut au moins deux fonctions identifiables spécifiques (20, 21, 22) pour le calcul d'une position de référence d'une métrique par rapport audit écran d'affichage, et/ou pour la détermination d'un alignement correct, et/ou d'un rapport de forme de la vidéo rendue par rapport à l'écran d'affichage.

6. Procédé selon la revendication 5, **caractérisé en ce que** le code à barres (2, 2ₜ, 2ₜ₊₁) comprend un motif rectangulaire ou un motif carré à quatre bords, et lesdites au moins deux fonctions identifiables spécifiques (20, 21, 22) sont des zones situées sur deux bords dudit motif.

7. Procédé selon l'une quelconque des revendications précédentes, **caractérisé en ce que** la trame vidéo capturée (1, 1ₜ, 1ₜ₊₁) comprend au moins deux fonctions spécifiques identifiables qui sont fixées au dispositif d'affichage, mais qui ne font pas partie des séquences vidéo de test pour la détermination de l'alignement correct du lecteur par rapport à la caméra.

8. Procédé selon la revendication 1, **caractérisé en ce que** l'étape de vérification comprend l'étape consistant à générer un journal de résultats à partir du journal de capture vidéo et du journal d'événements, et l'étape consistant à créer (S₉) une présentation « lisible par l'homme » du journal de résultats, ladite présentation incluant un graphique visuel représentant, sur un axe, une durée de commande de lecteur, et sur un autre axe, une durée de vidéo capturée.

9. Procédé selon la revendication 8, **caractérisé en ce que** des événements de test sont superposés sur ledit graphique visuel.
